# EUROPEAN PATENT APPLICATION

(11) **EP 4 783 304 A1**
(43) Date of publication of application: **29.07.2026**
(21) Application number: 25867224.5
(22) Date of filing: 18.11.2025
(51) Int. Cl.: H01M 10/6567, H01M 50/264, H01M 50/242, H01M 50/147, H01M 50/105, H01M 50/533

(54) **BATTERY PACK AND BATTERY UNIT**

(30) Priority: 06.12.2024 KR 20240180204
(71) Applicant: LG ENERGY SOLUTION, LTD., Seoul 07335 (KR)
(72) Inventor: LIM, Chae Won, Daejeon 34122 (KR); CHOI, Jong Hwa, Daejeon 34122 (KR); KIM, Min Bum, Daejeon 34122 (KR); JEONG, Su Jin, Daejeon 34122 (KR); HAM, Hyun Jun, Daejeon 34122 (KR)
(74) Representative: Plasseraud IP
(86) International application number: PCT/KR2025/019063
(87) International publication number: WO 2026/121636

(57) **Abstract**

The present disclosure provides a battery pack including: a battery unit including a plurality of battery cells stacked in one direction, side plates disposed at both ends in the stacking direction of the plurality of battery cells, and a band member connected to at least one of the mutual upper ends and mutual lower ends of the side plates; and a pack case forming an accommodation space in which at least one battery unit is mounted, wherein the pack case includes a pack case inlet and a pack case outlet through which insulating oil can flow in and out to the battery unit, and the plurality of battery cells is stacked in a direction crossing the inflow direction of the insulating oil.

## Description

### [Technical Field]

The present disclosure relates to a battery pack and a battery unit, and more specifically, to a battery pack and a battery unit capable of improving the cooling effect throughout the entire battery unit.

This application claims the benefit of Korean Patent Application No. 10-2024-0180204, filed on December 6, 2024, the disclosure of which is incorporated herein by reference.

### [Background]

Batteries such as lithium-ion batteries have the advantages of high energy density and operating voltage, and stable power capacity without memory effect, enabling long-term use. Accordingly, batteries are being used as power sources in various fields, from diverse mobile electronic devices to electric vehicles and hybrid vehicles.

The basic structure of a battery consists of an electrode assembly including a positive electrode plate coated with a positive electrode active material, a negative electrode plate coated with a negative electrode active material, and a separator positioned between the positive and negative electrode plates to prevent electrical short circuits and allow lithium ions to pass through; a case that hermetically accommodates the electrode assembly; and an electrolyte injected inside the case.

However, since the electrode assembly is sealed inside the case in a stacked state, if heat dissipation is not properly achieved, degradation of the battery occurs, leading not only to reduced lifespan but also to significantly compromised safety.

In cases where rapid charging and discharging are required, such as in battery packs for electric vehicles or hybrid vehicles, a large amount of heat is generated in the process of instantaneously providing high output, making the need for effective heat dissipation even greater. If such effective heat dissipation is not achieved, degradation due to heat accumulation begins, and in severe cases, ignition or explosion may occur.
Therefore, for effective thermal management, a cooling technology is required to dissipate heat generated from a battery pack comprising battery cell units [Summary]

### [Technical Problem]

The first technical problem to be solved by the present disclosure is to provide a battery pack capable of enhancing the cooling effect throughout the entire battery unit.

The second technical problem to be solved by the present disclosure is to provide a battery unit capable of enhancing the cooling effect throughout the entire battery unit.

### [Technical Solution]

To solve the first technical problem, the present disclosure provides a battery pack including: a battery unit including a plurality of battery cells stacked in one direction, side plates disposed at both ends in the stacking direction of the plurality of battery cells, and a band member connected between the side plates at their upper ends, their lower ends, or both; and a pack case forming an accommodation space in which at least one battery unit is mounted, wherein the pack case includes a pack case inlet and a pack case outlet through which insulating oil can flow in and out to the battery unit, and the plurality of battery cells is stacked in a direction crossing the inflow direction of the insulating oil.

In some embodiments, the battery unit may further include an elastic pad layer provided between the battery cells at both ends of the plurality of battery cells and the side plates.

In some embodiments, the battery pack may further include an elastic pad layer between the plurality of battery cells.

In some embodiments, the band member may be provided with a cooling flow path having a cooling flow path inlet and a cooling flow path outlet through which insulating oil can flow in and out.

In some embodiments, the cooling flow path may be formed in the width direction, which is the direction crossing the width of the band member, so that insulating oil can flow in and out.

In some embodiments, the battery pack may further include an insulating oil that flows in and out of the accommodation space of the pack case and immerses the battery unit in the accommodation space.

In some embodiments, the battery unit further includes a busbar frame cover surrounding electrode leads provided on the plurality of battery cells, and the busbar frame cover may be provided with an opening part through which the insulating oil flows in and out.

In some embodiments, the battery cells constituting the plurality of battery cells are bidirectional pouch cells in which a positive lead and a negative lead are separately disposed on both sides of the battery cell, the positive lead and the negative lead of the bidirectional pouch cell are respectively disposed in a direction perpendicular to the cell stacking direction, the battery unit is provided with a pair of busbar frame covers respectively surrounding the positive lead and the negative lead, and the pair of busbar frame covers may be provided with an opening part through which the insulating oil flows in and out.

In some embodiments, a first adhesive layer may be provided between the band member and the plurality of battery cells, and a second adhesive layer may be provided between the band member and the pack case.

In order to achieve the second technical problem, the present disclosure provides a battery unit including: a plurality of battery cells stacked in one direction; side plates disposed at both ends in the stacking direction of the plurality of battery cells; and a band member connected between the side plates at their upper ends, their lower ends, or both.

In some embodiments, the battery unit may further include an elastic pad layer provided between the battery cells at both ends of the plurality of battery cells and the side plates.

In some embodiments, the battery unit may further include an elastic pad layer between the plurality of battery cells.

In some embodiments, the band member may be provided with a cooling flow path having a cooling flow path inlet and a cooling flow path outlet through which insulating oil can flow in and out.

In some embodiments, the cooling flow path may be formed in the width direction, which is the direction crossing the width of the band member, so that insulating oil can flow in and out.

In some embodiments, the battery unit further includes a busbar frame cover surrounding electrode leads provided on the plurality of battery cells, and the busbar frame cover may be provided with an opening part through which the insulating oil flows in and out.

In some embodiments, a first adhesive layer may be provided between the band member and the plurality of battery cells.

### [Advantageous Effects]

The battery pack and battery unit according to embodiments of the present disclosure have the effect of enhancing the cooling effect throughout the entire battery unit.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a diagram showing a battery pack according to an embodiment of the present disclosure.
FIG. 2 is a diagram showing a state in which the pack case upper cover of the battery pack according to an embodiment of the present disclosure is disassembled.
FIG. 3 is a diagram showing a battery unit according to an embodiment of the present disclosure.
FIG. 4 is a diagram showing a state in which the battery unit according to an embodiment of the present disclosure is disassembled.
FIG. 5 is a diagram showing a cross-sectional view of the battery unit bonded to the pack case upper cover and pack case lower plate according to an embodiment of the present disclosure, cut along cutting line A-B.
FIG. 6 is a diagram showing a cross-sectional view of the battery unit bonded to the pack case upper cover and pack case lower plate according to an embodiment of the present disclosure, cut along cutting line C-D.
FIG. 7 is a diagram showing a band member used in the battery unit according to an embodiment of the present disclosure.

### [Best Mode for Carrying out the Invention]

Hereinafter, preferred embodiments of the concept of the present disclosure will be described in detail with reference to the accompanying drawings. However, the embodiments of the concept of the present disclosure may be modified in various other forms, and the scope of the concept of the present disclosure should not be construed as being limited by the embodiments described below. The embodiments of the concept of the present disclosure are preferably construed as being provided to more completely explain the concept of the present disclosure to those of ordinary skill in the art. The same reference numerals denote the same elements throughout. Furthermore, various elements and regions in the drawings are schematically drawn. Therefore, the concept of the present disclosure is not limited by the relative sizes or spacings drawn in the accompanying drawings.

Terms such as first, second, etc. may be used to describe various components, but the components are not limited by these terms. These terms are used only for the purpose of distinguishing one component from another. For example, a first component may be named a second component, and conversely, a second component may be named a first component without departing from the scope of the concept of the present disclosure.

The terms used in the present application are used only to describe specific embodiments and are not intended to limit the concept of the present disclosure. Singular expressions include plural expressions unless the context clearly dictates otherwise. In the present application, expressions such as "comprise" or "have" are intended to designate that the features, numbers, steps, operations, components, parts, or combinations thereof described in the specification exist, and should be understood as not precluding in advance the possibility of existence or addition of one or more other features, numbers, operations, components, parts, or combinations thereof.

Unless otherwise defined, all terms used herein, including technical and scientific terms, have the same meaning as commonly understood by those of ordinary skill in the art to which the concept of the present disclosure belongs. In addition, terms as defined in dictionaries that are commonly used should be interpreted as having meanings consistent with the meanings they have in the context of the relevant technology, and should not be interpreted in an excessively formal sense unless explicitly defined herein.

Where an embodiment can be implemented differently, a specific process order may be performed differently from the described order. For example, two processes described consecutively may be performed substantially simultaneously, or may be performed in the reverse order of the described order.

In the accompanying drawings, variations in the illustrated shapes may be expected depending on, for example, manufacturing techniques and/or tolerances. Therefore, the embodiments of the present disclosure should not be construed as being limited to the specific shapes of the regions illustrated in the present specification, and should include, for example, changes in shape caused during the manufacturing process. All terms "and/or" used herein include each and every combination of one or more of the mentioned components. In addition, the term "substrate" as used herein may refer to the substrate itself, or a laminated structure including the substrate and a predetermined layer or film formed on its surface. Also, "the surface of a substrate" as used herein may refer to the exposed surface of the substrate itself, or the outer surface of a predetermined layer or film formed on the substrate.

The following describes one aspect of the present disclosure for achieving the first technical objective mentioned above.

### (First Embodiment)

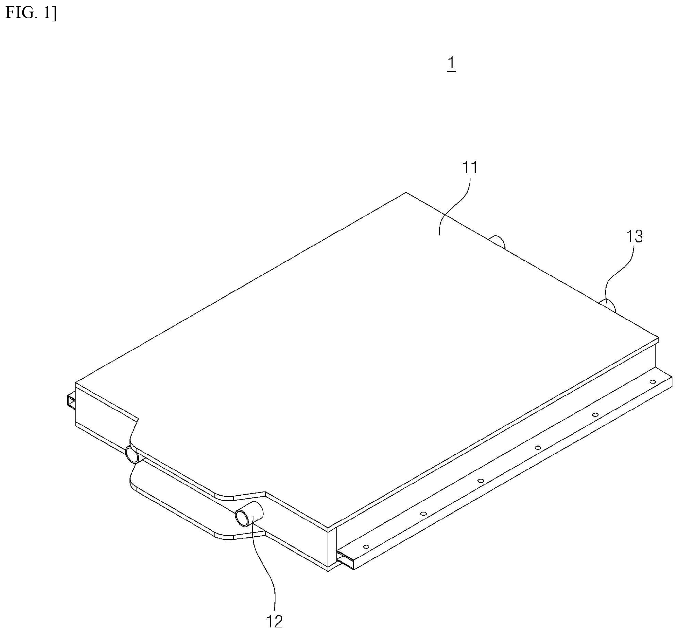

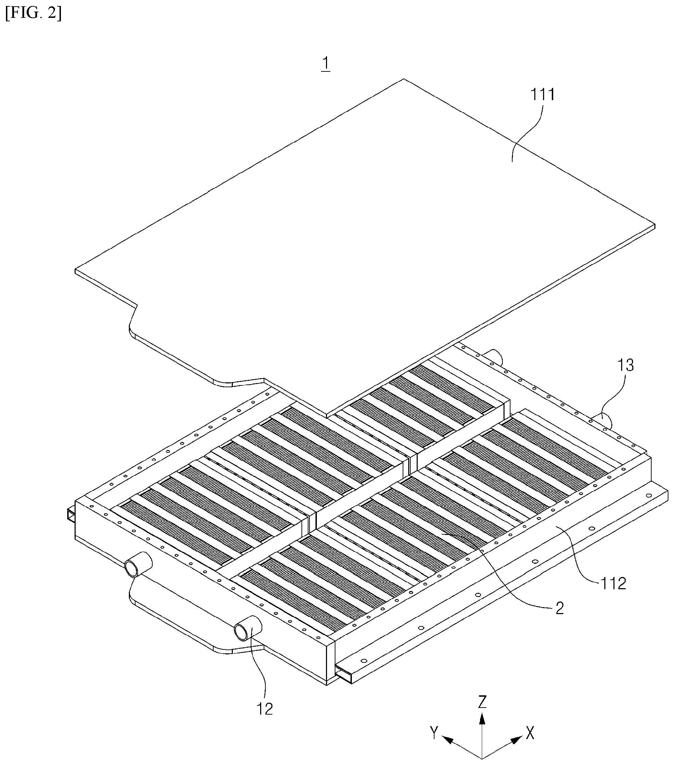

FIG. 1 is a diagram showing a battery pack 1 according to an embodiment of the present disclosure, and FIG. 2 is a diagram showing a state in which the pack case upper cover 111 of the battery pack 1 according to an embodiment of the present disclosure is disassembled.

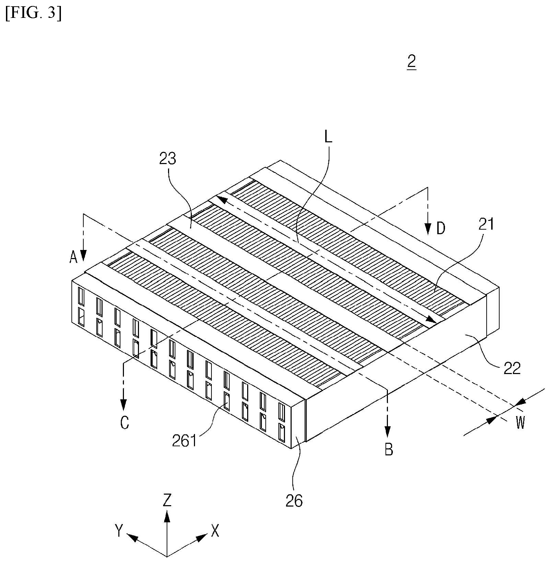

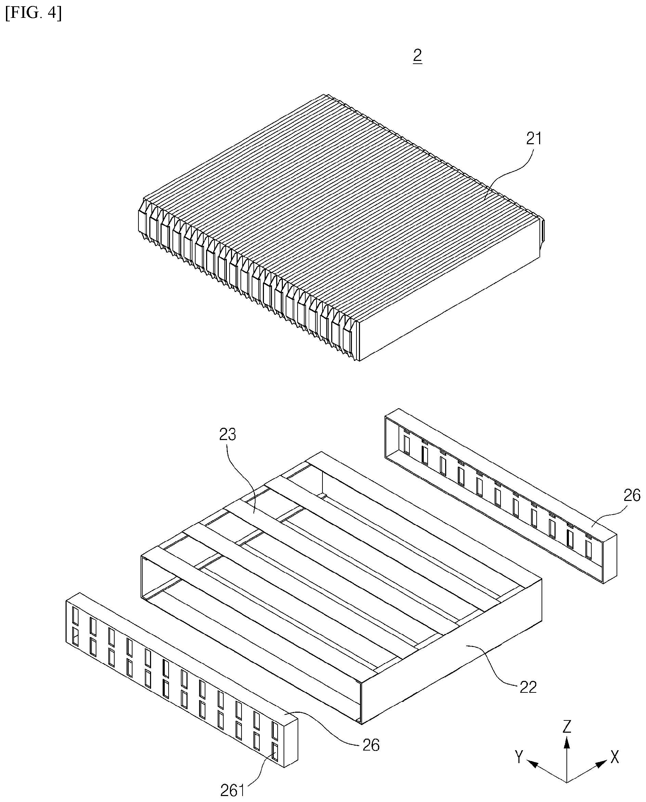

FIG. 3 is a diagram showing a battery unit 2 according to an embodiment of the present disclosure, and FIG. 4 is a diagram showing a state in which the battery unit 2 according to an embodiment of the present disclosure is disassembled.

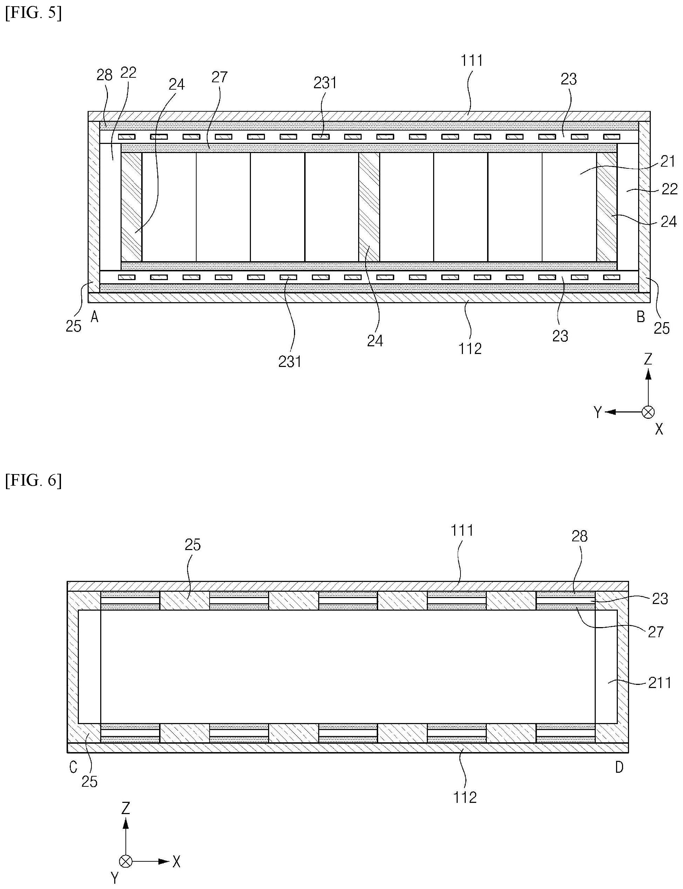

FIG. 5 is a diagram showing a cross-sectional view of the battery unit 2 bonded to the pack case upper cover 111 and pack case lower plate 112 according to an embodiment of the present disclosure, cut along cutting line A-B, and FIG. 6 is a diagram showing a cross-sectional view of the battery unit 2 bonded to the pack case upper cover 111 and pack case lower plate 112 according to an embodiment of the present disclosure, cut along cutting line C-D.

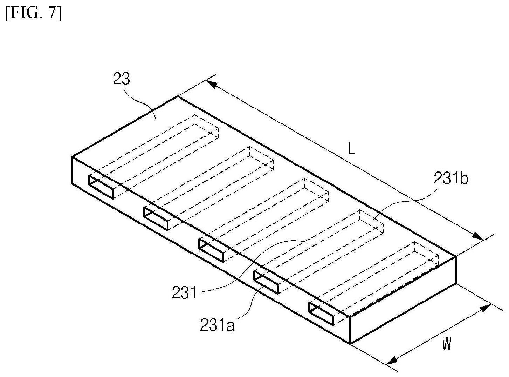

FIG. 7 is a diagram showing a band member 23 used in the battery unit 2 according to an embodiment of the present disclosure.

Referring to FIGS. 1 to 7, a battery pack 1 according to an embodiment of the present disclosure may include a battery unit 2 and a pack case 11.

The battery unit 2 may include a plurality of battery cells 21, side plates 22, and a band member 23.

The plurality of battery cells 21 may be stacked in one direction (e.g., Y direction).

The side plates 22 may be disposed at both ends of the plurality of battery cells 21 in the stacking direction (e.g., Y direction).

Disposed at both ends in the stacking direction (e.g., Y direction) of the plurality of battery cells 21, the side plates 22 can support the plurality of battery cells 21 in a state of being stacked in one direction.

The band member 23 can support and cool the plurality of battery cells 21.

In some embodiments, the band member 23 may have a shape in which the width W is narrower than the length L of the band member 23.

In some embodiments, the ratio of the length L to the width W may be 3 to 20 times.

When the ratio of the length L to the width W is less than 3 times, the amount of insulating oil flowing into the plurality of battery cells 21 may be insufficient to cool the plurality of battery cells 21, and when it is greater than 20 times, the durability of the band member 23 may be weakened, making it insufficient to support the plurality of battery cells 21.
3729

In some embodiments, there may be a plurality of band members 23. When there are a plurality of band members 23, they may be disposed spaced apart from each other.

The band member 23 may be connected between the side plates 22 at their upper ends, their lower ends, or both.

By being connected to at least one of the mutual upper ends and mutual lower ends of the side plates 22, the band member 23 may be disposed on at least one of the upper and lower parts of the pack case 11.

The band member 23 disposed on at least one of the upper and lower parts of the pack case 11 can prevent vertical movement of the plurality of battery cells 21 due to external impacts, thereby reducing the risk of accidents.

By being connected to at least one of the mutual upper ends and mutual lower ends of the side plates 22, the band member 23 can apply tensile force to the side plates 22 to support the plurality of battery cells 21.

The band member 23 may be made of metal, but is not limited thereto.

The pack case 11 can form an accommodation space in which at least one battery unit 2 is mounted.

In some embodiments, the pack case 11 may include a pack case upper cover 111 and a pack case lower plate 112.

In some embodiments, the pack case lower plate 112 may include a base plate and side walls erected on the base plate, and the base plate may extend beyond the side walls in the XY direction.

In some embodiments, the pack case upper cover 111 and the pack case lower plate 112 may be detachably attached. For example, the pack case upper cover 111 and the pack case lower plate 112 may be screw-coupled to attach the pack case upper cover 111 to the pack case lower plate 112, and the pack case upper cover 111 may be detached from the pack case lower plate 112 by releasing the screw coupling.

By being detachably attached, the battery unit 2 accommodated in the pack case 11 can be replaced.

The pack case 11 may further include a pack case inlet 12 and a pack case outlet 13 through which insulating oil 25 can flow in and out to the battery unit 2.

By including the pack case inlet 12 and pack case outlet 13 through which insulating oil 25 can flow in and out to the battery unit 2, the pack case 11 allows insulating oil 25 to flow in from outside the pack case 11, pass through the interior of the pack case 11, and flow out, so as to cool the battery cells included in the battery unit 2.

The plurality of battery cells 21 may be stacked in a direction (e.g., Y direction) crossing the inflow direction (e.g., Y direction) of the insulating oil 25.

By being stacked in a direction crossing the inflow direction of the insulating oil 25, insulating oil 25 can flow between the plurality of battery cells 21, enabling efficient cooling of the plurality of battery cells 21.

In some embodiments, the battery unit 2 may further include an elastic pad layer 24 provided between the battery cells at both ends of the plurality of battery cells 21 and the side plates 22.

By further including the elastic pad layer 24 provided between the battery cells at both ends of the plurality of battery cells 21 and the side plates 22, the battery unit 2 can mitigate external impacts on the plurality of battery cells 21, and the pressure generated during swelling of battery cells can be relieved by the elastic pad layer 24.

In some embodiments, an elastic pad layer 24 may be further included between the plurality of battery cells 21.

By further including the elastic pad layer 24 between the plurality of battery cells 21, damage between the plurality of battery cells due to external impacts can be prevented, and the pressure generated during swelling of battery cells can be relieved by the elastic pad layer 24.

In some embodiments, the band member 23 may be provided with a cooling flow path 231 forming an externally exposed cooling flow path inlet 231a and cooling flow path outlet 231b.

By being provided with the cooling flow path 231 forming an externally exposed inlet and outlet, insulating oil 25 can flow in and out of the interior of the band member 23.

In some embodiments, the cooling flow path 231 may be formed in the width direction (e.g., X direction), which is the direction crossing the width W of the band member 23, so that insulating oil 25 can flow in and out.

The width direction (e.g., X direction), which is the direction crossing the width W of the band member 23 in which the cooling flow path 231 is formed, may be a direction (e.g., X direction) crossing the stacking direction (e.g., Y direction) of the plurality of battery cells 21.

By being formed in the width direction (e.g., X direction), which is the direction crossing the width W of the band member 23, the cooling flow path 231 allows insulating oil 25 to flow in a direction (e.g., X direction) crossing the stacking direction (e.g., Y direction) of the plurality of battery cells 21.

By flowing in a direction (e.g., X direction) crossing the stacking direction (e.g., Y direction) of the plurality of battery cells 21, insulating oil 25 can flow between the plurality of battery cells 21, enabling efficient cooling of the plurality of battery cells 21.

In some embodiments, the battery pack may further include insulating oil 25 that flows in and out of the accommodation space of the pack case 11 and immerses the battery unit 2 in the accommodation space.

The insulating oil 25 may be a general insulating oil used in the technical field, and is not particularly limited to any one type.

By further including insulating oil 25 that flows in and out of the accommodation space of the pack case 11 and immerses the battery unit 2 in the accommodation space, the plurality of battery cells 21 can be efficiently cooled, and short circuits between battery cells can be prevented due to the insulating properties of the insulating oil 25.

In some embodiments, the battery unit 2 may further include a busbar frame cover 26 surrounding electrode leads 211 provided on the plurality of battery cells 21, and the busbar frame cover 26 may be provided with an opening part 261 through which the insulating oil 25 flows in and out.

By further including the busbar frame cover 26 surrounding the electrode leads 211 provided on the plurality of battery cells 21 and the busbar frame cover 26 being provided with an opening part 261 through which the insulating oil 25 flows in and out, the insulating oil 25 introduced into the battery pack 1 can easily flow into the battery unit 2.

In some embodiments, the battery cells constituting the plurality of battery cells 21 are bidirectional pouch cells in which a positive lead and a negative lead are separately disposed on both sides of the battery cell, and the positive lead and the negative lead of the bidirectional pouch cell may be respectively disposed in a direction (e.g., X direction) perpendicular to the cell stacking direction (e.g., Y direction).

By disposing the positive lead and the negative lead of the bidirectional pouch cell respectively in a direction (e.g., X direction) perpendicular to the cell stacking direction (e.g., Y direction), the insulating oil 25 can easily flow between the plurality of battery cells 21 when the insulating oil 25 flows in.

In some embodiments, the battery unit 2 includes a pair of busbar frame covers 26 respectively surrounding the positive lead and the negative lead, and the pair of busbar frame covers 26 may be provided with an opening part 261 through which the insulating oil 25 flows in and out.

By being provided with the opening part 261 through which the insulating oil 25 flows in and out, the pair of busbar frame covers 26 allows the insulating oil 25 introduced into the battery pack 1 to easily flow into the battery unit 2.

In some embodiments, a first adhesive layer 27 may be provided between the band member 23 and the plurality of battery cells 21, and a second adhesive layer 28 may be provided between the band member 23 and the pack case 11.

The first adhesive layer 27 and the second adhesive layer 28 may have elasticity, so they can protect the plurality of battery cells 21 and the band member 23 even against external impacts.

In some embodiments, the first adhesive layer 27 and the second adhesive layer 28 may be formed by an adhesive.

After curing, the adhesive can strongly adhere to the plurality of battery cells 21 and the pack case 11, thereby preventing positional change or damage of the plurality of battery cells 21 due to external impacts.

### (Second Embodiment)

FIG. 1 is a diagram showing a battery pack 1 according to an embodiment of the present disclosure, and FIG. 2 is a diagram showing a state in which the pack case upper cover 111 of the battery pack 1 according to an embodiment of the present disclosure is disassembled.

FIG. 3 is a diagram showing a battery unit 2 according to an embodiment of the present disclosure, and FIG. 4 is a diagram showing a state in which the battery unit 2 according to an embodiment of the present disclosure is disassembled.

FIG. 5 is a diagram showing a cross-sectional view of the battery unit 2 bonded to the pack case upper cover 111 and pack case lower plate 112 according to an embodiment of the present disclosure, cut along cutting line A-B, and FIG. 6 is a diagram showing a cross-sectional view of the battery unit 2 bonded to the pack case upper cover 111 and pack case lower plate 112 according to an embodiment of the present disclosure, cut along cutting line C-D.

FIG. 7 is a diagram showing a band member 23 used in the battery unit 2 according to an embodiment of the present disclosure.

Referring to FIGS. 1 to 7, a battery unit 2 according to an embodiment of the present disclosure may include battery cells, side plates 22, and a band member 23.

The plurality of battery cells 21 may be stacked in one direction (e.g., Y direction).

The side plates 22 may be disposed at both ends of the plurality of battery cells 21 in the stacking direction (e.g., Y direction).

Disposed at both ends in the stacking direction (e.g., Y direction) of the plurality of battery cells 21, the side plates 22 can support the plurality of battery cells 21 in a state of being stacked in one direction.

The band member 23 can support and cool the plurality of battery cells 21.

The band member 23 may have a shape in which the width direction is narrower than the longitudinal direction, which is the direction crossing the length L of the band member 24.

In some embodiments, there may be a plurality of band members 23. When there are a plurality of band members 23, they may be disposed spaced apart from each other.

The band member 23 may be connected to at least one of the mutual upper ends and mutual lower ends of the side plates 22.

By being connected to at least one of the mutual upper ends and mutual lower ends of the side plates 22, the band member 23 may be disposed on at least one of the upper and lower parts of the pack case 11.

The band member 23 disposed on at least one of the upper and lower parts of the pack case 11 can prevent vertical movement of the plurality of battery cells 21 due to external impacts, thereby reducing the risk of accidents.

By being connected to at least one of the mutual upper ends and mutual lower ends of the side plates 22, the band member 23 can apply tensile force to the side plates 22 to support the plurality of battery cells 21.

The band member 23 may be made of metal, but is not limited thereto.

By further including the elastic pad layer 24 provided between the battery cells at both ends of the plurality of battery cells 21 and the side plates 22, the battery unit 2 can mitigate external impacts on the plurality of battery cells 21, and the pressure generated during swelling of battery cells can be relieved by the elastic pad layer 24.

In some embodiments, an elastic pad layer 24 may be further included between the plurality of battery cells 21.

By further including the elastic pad layer 24 between the plurality of battery cells 21, damage between the plurality of battery cells due to external impacts can be prevented, and the pressure generated during swelling of battery cells can be relieved by the elastic pad layer 24.

By being provided with the cooling flow path 231 forming an externally exposed cooling flow path inlet 231a and cooling flow path outlet 231b, insulating oil 25 can flow in and out of the interior of the band member 23.

In some embodiments, the cooling flow path 231 may be formed in the width direction (e.g., X direction), which is the direction crossing the width W of the band member 23, so that insulating oil 25 can flow in and out.

The width direction (e.g., X direction), which is the direction crossing the width W of the band member 23 in which the cooling flow path 231 is formed, may be a direction (e.g., X direction) crossing the stacking direction (e.g., Y direction) of the plurality of battery cells 21.

By being formed in the width direction (e.g., X direction), which is the direction crossing the width W of the band member 23, the cooling flow path 231 allows insulating oil 25 to flow in a direction (e.g., X direction) crossing the stacking direction (e.g., Y direction) of the plurality of battery cells 21.

By flowing in a direction (e.g., X direction) crossing the stacking direction (e.g., Y direction) of the plurality of battery cells 21, insulating oil 25 can flow between the plurality of battery cells 21, enabling efficient cooling of the plurality of battery cells 21.

In some embodiments, the battery unit 2 may further include a busbar frame cover 26 surrounding electrode leads 211 provided on the plurality of battery cells 21, and the busbar frame cover 26 may be provided with an opening part 261 through which the insulating oil 25 flows in and out.

By further including the busbar frame cover 26 surrounding the electrode leads 211 provided on the plurality of battery cells 21 and the busbar frame cover 26 being provided with the opening part 261 through which the insulating oil 25 flows in and out, the insulating oil 25 introduced into the battery pack 1 can easily flow into the battery unit 2.

In some embodiments, a first adhesive layer 27 may be provided between the band member 23 and the plurality of battery cells 21.

The first adhesive layer 27 may have elasticity, so it can protect the plurality of battery cells 21 and the band member 23 even against external impacts.

In some embodiments, the first adhesive layer 27 may be formed by an adhesive.

After curing, the adhesive can strongly adhere to the plurality of battery cells 21, thereby preventing positional change or damage of the plurality of battery cells 21 due to external impacts.

Although the embodiments of the present disclosure have been described in detail as described above, those of ordinary skill in the art to which the present disclosure belongs will be able to implement the present disclosure with various modifications without departing from the spirit and scope of the present disclosure as defined in the appended claims. Therefore, future modifications of the embodiments of the present disclosure will not be able to deviate from the technology of the present disclosure.

## Claims

1. A battery pack comprising:
a battery unit comprising a plurality of battery cells stacked in one direction, side plates disposed at both ends in the stacking direction of the plurality of battery cells, and a band member connected between the side plates at their upper ends, their lower ends, or both; and
a pack case forming an accommodation space in which at least one battery unit is mounted, wherein
the pack case comprises a pack case inlet and a pack case outlet through which insulating oil can flow in and out to the battery unit, and
the plurality of battery cells is stacked in a direction crossing the inflow direction of the insulating oil.

2. The battery pack of claim 1, wherein
the battery unit further comprises an elastic pad layer provided between the battery cells at both ends of the plurality of battery cells and the side plates.

3. The battery pack of claim 1, further comprising:
an elastic pad layer between the plurality of battery cells.

4. The battery pack of claim 1, wherein
the band member is provided with a cooling flow path having a cooling flow path inlet and a cooling flow path outlet through which insulating oil can flow in and out.

5. The battery pack of claim 4, wherein
the cooling flow path is formed in the width direction, which is the direction crossing the width of the band member, so that insulating oil can flow in and out.

6. The battery pack of claim 1, further comprising:
an insulating oil that flows in and out of the accommodation space of the pack case and immerses the battery unit in the accommodation space.

7. The battery pack of claim 1, wherein
the battery unit further comprises a busbar frame cover surrounding electrode leads provided on the plurality of battery cells, and
the busbar frame cover is provided with an opening part through which the insulating oil flows in and out.

8. The battery pack of claim 1, wherein
the battery cells constituting the plurality of battery cells are bidirectional pouch cells in which a positive lead and a negative lead are separately disposed on both sides of the battery cell,
the positive lead and the negative lead of the bidirectional pouch cell are respectively disposed in a direction perpendicular to the cell stacking direction,
the battery unit is provided with a pair of busbar frame covers respectively surrounding the positive lead and the negative lead, and
the pair of busbar frame covers are provided with an opening part through which the insulating oil flows in and out.

9. The battery pack of claim 1, wherein
a first adhesive layer is provided between the band member and the plurality of battery cells, and a second adhesive layer is provided between the band member and the pack case.

10. A battery unit comprising:
a plurality of battery cells stacked in one direction;
side plates disposed at both ends in the stacking direction of the plurality of battery cells; and
a band member connected between the side plates at their upper ends, their lower ends, or both.

11. The battery unit of claim 10, wherein
the battery unit further comprises an elastic pad layer provided between the battery cells at both ends of the plurality of battery cells and the side plates.

12. The battery unit of claim 10, further comprising:
an elastic pad layer between the plurality of battery cells.

13. The battery unit of claim 10, wherein
the band member is provided with a cooling flow path having a cooling flow path inlet and a cooling flow path outlet through which insulating oil can flow in and out.

14. The battery unit of claim 13, wherein
the cooling flow path is formed in the width direction, which is the direction crossing the width of the band member, so that insulating oil can flow in and out.

15. The battery unit of claim 10, wherein
the battery unit further comprises a busbar frame cover surrounding electrode leads provided on the plurality of battery cells, and
the busbar frame cover is provided with an opening part through which the insulating oil flows in and out.

16. The battery unit of claim 10, wherein
a first adhesive layer is provided between the band member and the plurality of battery cells.
